# EUROPÄISCHE PATENTSCHRIFT

(11) **EP 3 271 088 B1**
(45) Veröffentlichungstag und Bekanntmachung des Hinweises auf die Patenterteilung: **29.06.2022**
(21) Anmeldenummer: 16704832.1
(22) Anmeldetag: 15.02.2016
(51) Int. Cl.: B08B 15/02, G01G 21/28, B01L 1/00, B25H 1/20

(54) **WÄGEABZUG**
WEIGHING FUME CUPBOARD
SORBONNE DE PESÉE

(30) Priorität: 15.03.2015 DE 102015103766
(43) Veröffentlichungstag der Anmeldung: 24.01.2018
(73) Patentinhaber: Waldner AG, 8732 Neuhaus St. Gallen (CH)
(72) Erfinder: LIEBSCH, Jürgen, 88161 Lindenberg / Bayern (DE)
(74) Vertreter: Maiwald Patent- und Rechtsanwaltsgesellschaft mbH
(86) Internationale Anmeldenummer: PCT/EP2016/053118
(87) Internationale Veröffentlichungsnummer: WO 2016/146315

(56) Entgegenhaltungen:
- EP-A1- 1 312 871
- EP-A1- 2 230 494
- EP-A2- 0 917 910
- DE-A1- 2 631 924
- DE-A1- 10 042 437
- DE-A1-102011 000 429

## Beschreibung

Die vorliegende Erfindung betrifft einen Wägeabzug zum Wägen pharmazeutisch wirksamer bzw. toxischer Substanzen in einem Labor.

Die pharmazeutische und chemische Industrie hat durch intensive Entwicklungsarbeit effektivere Medikamente und Zubereitungen hervorgebracht, deren Wirksamkeit bei gleichzeitiger Verringerung der Wirkstoffkonzentration länger anhaltend ist. Daher stellen bereits kleinste Mengen an wirksamen bzw. toxischen Substanzen für den damit beschäftigen Forscher und Laborarbeiter ein hohes Gefährdungspotenzial dar.

Der Wägeprozess, bei dem solche Substanzen "offen" gehandhabt werden und mithilfe hochauflösender Waagen (Auflösung von bis zu 0,001 mg) proportioniert werden, birgt ein erhebliches Risiko, da mit bloßem Auge unsichtbare Partikel, die oft kleiner als 10 µm sind, von solchen Substanzen luftgetragen freigesetzt werden und über die Luft zum Laborpersonal gelangen können.

Beim Wägeprozess werden zum Schutz der Labormitarbeiter Wägeabzüge eingesetzt, die über einen be- und entlüfteten Arbeitsraum verfügen, der von vorne für den Labormitarbeiter über eine Arbeitsöffnung zugänglich ist. In sitzender oder stehender Stellung führt der Laborarbeiter seine Unterarme in den Arbeitsraum ein, legt diese meist auf einer Armauflage ab und handhabt so die auf der Arbeitsplatte befindlichen Laborutensilien und Substanzen. Zu solchen Utensilien gehören die bereits oben erwähnten hochauflösenden Laborwaagen, aber auch Behältnisse, in denen sich die verschiedenen zu portionierenden Substanzen befinden, und weitere Arbeitsgeräte wie ein Spatel, um die Substanzen aus dem Behältnis zu holen und in ein Wägeschiffchen auf der Laborwaage einzubringen. Nach dem Wiegen der Substanzen werden diese gegebenenfalls in ein anderes Behältnis umgefüllt.

Nachteilig an herkömmlichen Wägeabzügen ist, dass äußere Einflüsse, wie zum Beispiel Luftverwirbelungen oder mechanische Erschütterungen, Einfluss auf die extrem hochauflösenden Waagen und damit auf die Wägeergebnisse haben können. Aber auch im Umluftbetrieb betriebene Wägeabzüge, also solche, die nicht an ein gebäudeseitiges Abluftsystem angeschlossen sind, sondern vielmehr über ein eigenes Filtersystem sowie einen eigenen Ventilator verfügen, der die Luft aus dem Arbeitsraum absaugt, durch das Filtersystem hindurchführt und die gereinigte Luft in den Laborraum wieder einbläst, haben oft den Nachteil, dass Vibrationen des Ventilators Einfluss auf die Wägeergebnisse haben können. Die Wägeergebnisse sind somit nicht zwingend stabil und reproduzierbar.

Ebenso ermöglicht die Ergonomie von herkömmlichen Wägeabzügen nicht immer ein möglichst entspanntes und weitgehend ermüdungsfreies Arbeiten. Darüber hinaus ist es aus arbeitshygienischen Gründen wichtig, dass Wägeabzüge einfach gereinigt und dekontaminiert werden können. Dies ist bei herkömmlichen Wägeabzügen aufgrund von oftmals konstruktionsbedingt schwer zugänglichen Stellen nicht immer der Fall. Des Weiteren birgt der Filterwechsel bei im Umluftbetrieb betriebenen Wägeabzügen die Gefahr, dass sich gefährliche Substanzen vom Filter lösen und der Labormitarbeiter mit diesen in Kontakt kommt.

In EP 1 312 871 A1 ist eine Sicherheitswerkbank offenbart, welche die Merkmale des Oberbegriffs des Anspruches 1 aufweist. In DE 100 42 437 A1 ist eine Arbeitsplatte offenbart, die auf mehreren Druckfedern gelagert ist. Im Randbereich der Arbeitsplatte sind ein oder mehrere federelastische Elemente angeordnet, die bei einer Krafteinwirkung eine erste Kraft erzeugen, die der Krafteinwirkung entgegengerichtet ist. In einem mittleren Bereich ist mindestens ein Element angeordnet, das eine zweite Kraft erzeugt, die zur Krafteinwirkung gleichgerichtet ist. Durch diese Anordnung wird erreicht, dass bei einer auf einen beliebigen Punkt der Arbeitsplatte wirkenden Kraft immer eine in allen Bereichen der Arbeitsplatte annähernd konstante resultierende Gegenkraft entsteht.

Eine Aufgabe der vorliegenden Erfindung besteht daher darin, die Nachteile des Standes der Technik zu beseitigen, zumindest aber zu minimieren und darüber hinaus Vorteile zu erzielen, die mit herkömmlichen Wägeabzügen nicht erreichbar sind.

Diese Aufgabe wird durch die Merkmalskombination des unabhängigen Patentanspruches 1 gelöst. Optionale bzw. vorteilhafte Merkmale der Erfindung sind in den abhängigen Ansprüchen angegeben.

Nach einer bevorzugten Ausführungsform der Erfindung umfasst ein Wägeabzug zum Wägen pharmazeutisch wirksamer bzw. toxischer Substanzen in einem Labor ein Gehäuse, das einen Arbeitsraum festlegt, wobei eine Vorderseite des Gehäuses eine bei bestimmungsgemäßem Gebrauch des Wägeabzuges stets geöffnete Arbeitsöffnung aufweist, eine Arbeitsplatte, die den Arbeitsraum bodenseitig begrenzt, eine Armauflage im Bereich der Arbeitsöffnung, und einen Träger, der das Gewicht des Gehäuses, der Arbeitsplatte und der Armauflage trägt, wobei die Arbeitsplatte bei bestimmungsgemäßen Gebrauch des Wägeabzuges stoß- und schwingungsentkoppelt von dem Gehäuse, der Armauflage und dem Träger ist.

Vorzugsweise gibt es keinerlei direkten Kontakt zwischen der Arbeitsplatte und (i) dem Gehäuse, (ii) der Armauflage und (iii) dem Träger.

Noch bevorzugter ist es, wenn es keinerlei lösbare kraft-, form- oder stoffschlüssige Verbindung zwischen der Arbeitsplatte und (i) dem Gehäuse, (ii) der Armauflage und (iii) dem Träger gibt.

Nach einer weiteren vorteilhaften Ausführungsform der Erfindung liegt die Arbeitsplatte ausschließlich auf dem Träger stoß- und schwingungsentkoppelt auf.

Noch vorteilhafter ist es, wenn zwischen dem Träger und der Arbeitsplatte mindestens ein federelastisches Element vorgesehen ist, auf dem die Arbeitsplatte aufliegt.

Vorzugsweise ist das federelastische Element aus Gummi oder einem elastischen Kunststoff hergestellt.

Noch bevorzugter ist der Träger derart ausgebildet, dass er eine federelastische 3-Punkt oder 4-Punkt Auflage für die Arbeitsplatte vorsieht.

Nach einer weiteren bevorzugten Ausführungsform der Erfindung ist die Arbeitsplatte monolithisch und weist ein Gewicht in einem Bereich von 40 kg bis 60 kg auf.

Vorzugsweise liegen das Gehäuse und die Armauflage ausschließlich auf dem Träger auf.

Weiterhin bevorzugt weist der Träger mindestens eine Strebe auf und ist das federelastische Element zwischen der Strebe und der Arbeitsplatte angeordnet, wobei die Strebe derart angeordnet ist, dass eine Arbeitsfläche der auf dem federelastischen Element aufliegenden Arbeitsplatte bündig mit einer Oberseite des Trägers fluchtet.

Weiterhin bevorzugt ist entlang des seitlichen und hinteren Umfangs der Arbeitsplatte eine elastische Fugendichtung vorgesehen.

Die Erfindung wird nun rein beispielhaft anhand einer bevorzugten Ausführungsform unter Bezugnahme auf die beigefügten Figuren beschrieben. Von den Figuren zeigen:
Fig. 1 eine perspektivische Vorderansicht eines erfindungsgemäßen Wägeabzugs;
Fig. 2 eine Schnittansicht entlang der in Fig. 1 dargestellten Schnittlinie A-A;
Fig. 3 eine Schnittansicht des innerhalb des Gehäuses befindlichen Arbeitsraumes;
Fig. 4 eine Draufsicht sowie zwei Schnittansichten entlang der dargestellten Schnittlinien A-A und B-B des Scharniers;
Fig. 5 eine Schnittansicht der Arbeitsplatte im Bereich der Prallwand;
Fig. 6 eine Schnittansicht der Arbeitsplatte im Bereich einer Seitenwand;
Fig. 7 eine perspektivische Darstellung eines Eckprofils;
Fig. 8 eine Schnittansicht des Abluft- bzw. Umluftfiltersystems, und
Fig. 9 eine perspektivische Explosionsansicht des in Fig. 8 dargestellten Abluft- bzw. Umluftfiltersystems.

Zur besseren Verständlichkeit der Figuren und deren Schnittansichten sowie der entsprechenden Figurenbeschreibungen wurde ein kartesisches Koordinatensystem in einige der Figuren eingezeichnet. Soweit nichts anderes angegeben ist, bezieht sich die x-Richtung auf die Breitenerstreckung, die y-Richtung auf die Tiefenerstreckung und die z-Richtung auf die Höhenerstreckung des Wägeabzuges.

Wenngleich sich sämtliche der hier beschriebenen Aspekte auf einen Wägeabzug beziehen, der im Umluftbetrieb betrieben wird, so können zumindest einige dieser Aspekte auch bei einem Wägeabzug eingesetzt werden, der im Abluftbetrieb betrieben wird.

Auch wenn in der folgenden Beschreibung von Abluft die Rede ist, so ist damit diejenige Luft gemeint, die aus dem Arbeitsraum des Wägeabzuges abgeführt und sodann einem Abluftfiltersystem zu Reinigungszwecken zugeführt wird. Auch bei einem Wägeabzug, der im Abluftbetrieb betrieben wird, das heißt ein solcher, der an ein gebäudeseitiges Abluftsystem angeschlossen wird, muss Luft aus dem Arbeitsraum abgeführt und gefiltert werden, bevor sie gebäudeseitig in die Atmosphäre entlassen wird. Somit besteht der einzige Unterschied darin, dass bei dem hier beschriebenen Ausführungsbeispiel die abgeführte und gefilterte Abluft mithilfe eines Ventilators dem Laborraum, in dem der Wägeabzug installiert ist, erneut zugeführt wird, während bei einem abluftbetriebenen Wägeabzug die Abluft durch eine gebäudeseitig installierte Abluftleitung, in der meist auch der Abluftfilter installiert ist, in die Atmosphäre ausgeblasen wird.

Darüber hinaus wird darauf hingewiesen, dass einige der hier beschriebenen Aspekte auch bei einem geschlossenen Isolator oder Containment-System verwendet werden können. Ein Isolator oder Containment-System ist ein geschlossener Abzug, dessen Vorderseite keine stets geöffnete Arbeitsöffnung besitzt, sondern an dessen Vorderseite zwei Öffnungen vorgesehen sind, die innenseitig innerhalb des Arbeitsraums mittels zweier meist aus Gummi gefertigter Handschuhe dicht verschlossen sind. Der Laborarbeiter greift sozusagen mit seinen Händen durch die Öffnungen und stülpt sich direkt im Anschluss die Arbeitshandschuhe über. Im Gegensatz zu solchen geschlossenen Isolatoren oder Containment-Systemen ist der hier beschriebene Wägeabzug offen, da er über eine stets geöffnete Arbeitsöffnung verfügt.

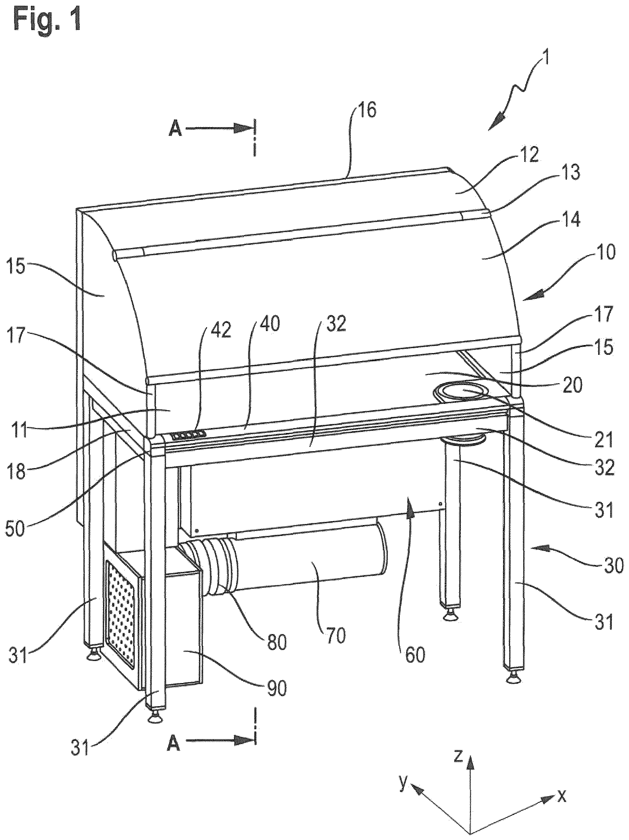

Der in Fig. 1 dargestellte Wägeabzug 1 umfasst vorzugsweise im Wesentlichen die folgenden Komponenten: ein Gehäuse 10, eine Arbeitsplatte 20, einen Träger 30, eine Armauflage 40, ein Filtersystem 60, einen Ventilator 70 und einen Auslass 90, der vorzugsweise über einen Schlauch 80 mit dem Ventilator 70 verbunden ist.

Der Träger 30, der vorzugsweise als Tischgestell ausgestaltet ist, umfasst bei dem hier gezeigten Ausführungsbeispiel vier Standbeine 31, deren bodenseitiges Ende jeweils mit einer nicht näher beschriebenen Nivellierung versehen ist. Diese Nivellierung ist dann von Vorteil, wenn der Boden, auf dem der Wägeabzug 1 gestellt wird, etwaige Unebenheiten aufweist, so dass mithilfe einer oder mehrerer Nivellierungen ein Wackeln des gesamten Abzuges 1 vermieden werden kann.

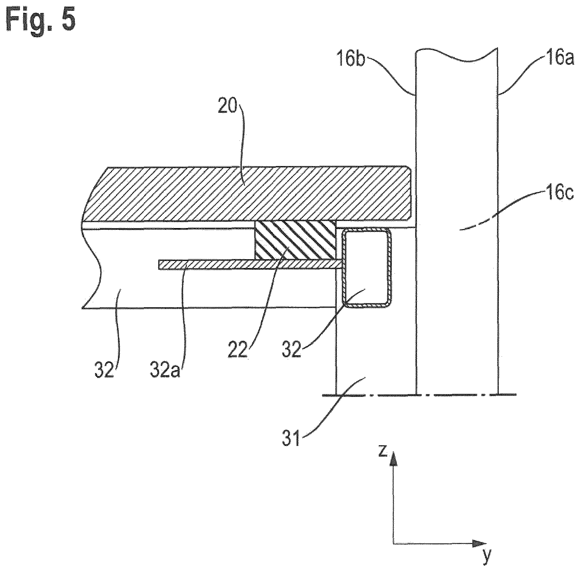

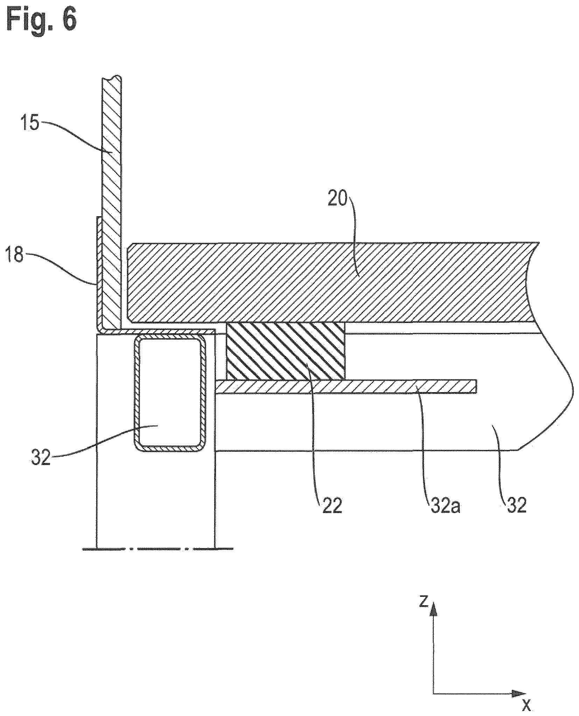

Die Standbeine 31 sind aus Stabilitätsgründen durch Querstreben 32, die sich entweder entlang der Breite (X-Richtung) und/oder entlang der Tiefe (Y-Richtung) erstrecken, miteinander verbunden. Wie in Bezug auf die Fig. 5 und Fig. 6 näher beschrieben wird, lagert auf dem Träger 30 eine Arbeitsplatte 20. Dies kann durch eine 3-Punkt Lagerung oder auch, wie in den Figuren gezeigt, durch eine 4-Punkt Lagerung erreicht werden. Ebenso befindet sich auf dem Träger 30 das Gehäuse 10. Somit trägt der Träger 30 das Gewicht des Gehäuses 10, der Arbeitsplatte 20 und der Armauflage 40. In dem in Fig. 1 gezeigten Ausführungsbeispiel trägt der Träger 30 vorzugsweise zusätzlich das Gewicht des Abluft- bzw. Umluftfiltersystems 60 sowie des Ventilators 70 und des Schlauchs 80.

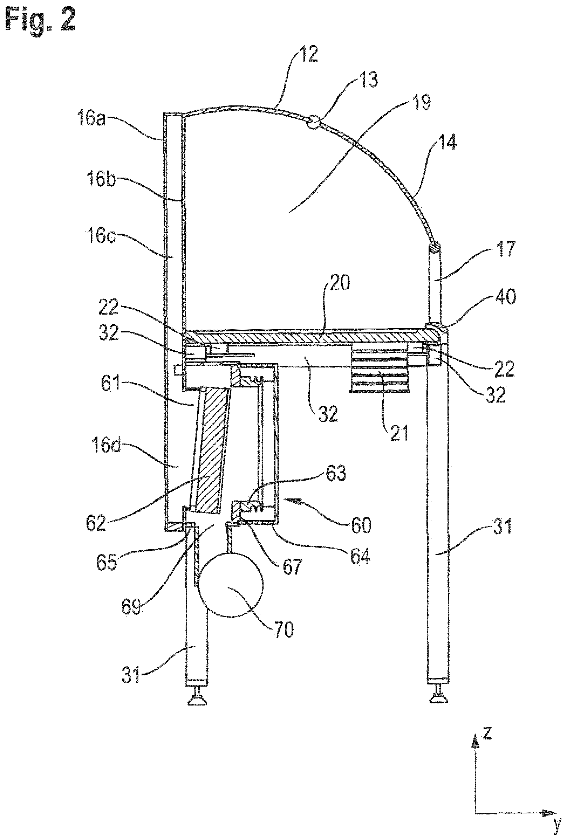

Das Gehäuse 10, das einen Arbeitsraum 19 festlegt, umfasst rückseitig vom Arbeitsraum 19 gelegen eine doppelwandig 16a, 16b ausgeführte Prallwand 16. Innerhalb der doppelwandigen Prallwand 16 befindet sich ein Hohlraum 16c (Fig. 2), durch den die Abluft in Richtung des Abluftfiltersystems 60 geführt wird. Das Gehäuse 10 weist als seitliche Begrenzung zwei Seitenwände 15 auf sowie an der Vorder- bzw. Oberseite ein Oberteil 12 sowie eine aufklappbare Frontscheibe 14. Die Seitenwände 15, die vorzugsweise auch als seitlich Abdeckung der Prallwand 16 dienen können, sowie das Oberteil 12 sind fest mit der Prallwand 16 (16a oder 16b) verbunden, während die Frontscheibe 14 verschwenkbar bzw. drehbar mittels eines Scharniers 13 mit dem Oberteil 12 verbunden ist.

In Fig. 1 ist die Frontscheibe 14 in der geschlossenen Stellung gezeigt. Sie kann aber von dieser geschlossenen Stellung in eine geöffnete Stellung verschwenkt werden, wodurch etwaige im Wägeabzug benötigte Utensilien in den Arbeitsraum 19 eingebracht und auf der Arbeitsplatte 20 abgestellt werden können. Zu solchen Utensilien gehören beispielsweise hochauflösende Laborwagen, Behältnisse, in denen abzuwägende Substanzen enthalten sind, sowie weitere Behältnisse, in die eine bereits abgewogene Substanz letztendlich umgefüllt wird. Des Weiteren werden normalerweise in derartigen Wägeabzügen kleinere Utensilien wie zum Beispiel Arbeitshandschuhe, Spatel, Wägeschiffchen und dergleichen verwendet.

Unterhalb der verschwenkbaren Frontscheibe 14 ist eine beim bestimmungsgemäßen Gebrauch des Wägeabzugs 1 stets geöffnete Arbeitsöffnung 11 angeordnet. Durch diese Arbeitsöffnung 11 erhält der Laborarbeiter Zugang zum Arbeitsraum 19. Normalerweise befindet sich der Laborarbeiter in einer Sitzstellung vor dem Wägeabzug 1, wobei die Sitzstellung so eingerichtet ist, dass die Arbeitsöffnung 11 in Höhe der noch leicht angewinkelten Unterarme des Laborarbeiters ist und dieser so ergonomisch im Arbeitsraum 19 seine Arbeiten erledigen kann. In dieser Sitzstellung beobachtet er durch die durchsichtige Frontscheibe 14 die von ihm zu vollziehenden Arbeitsabläufe. Um einen guten Rundumblick um das Geschehen im Arbeitsraum 19 zu ermöglichen, sind auch die Seitenwände 15 sowie das Oberteil 12 vorzugsweise durchsichtig. Bevorzugt sind die Frontscheibe 14, das Oberteil 12 und die Seitenwände 15 aus Acrylglas gefertigt.

Um dem Labormitarbeiter eine möglichst reflexionsfreie Sicht auf das auf der Arbeitsplatte 20 befindliche Arbeitsgerät nebst Utensilien zu verschaffen, was wiederum zum ermüdungsarmen Arbeiten mit dem Wägeabzug 1 beiträgt, ist die Frontscheibe 14, wie in Fig. 2 zu sehen ist, konvex gekrümmt. Vorzugsweise ist der Krümmungsradius konstant, so dass die Kontur der Frontscheibe 14 einem Kreissegment entspricht. Vorzugsweise ist ebenfalls das Oberteil 12 konvex gekrümmt. Vorzugsweise entspricht der Krümmungsradius der Frontscheibe 14 dem Krümmungsradius des Oberteils 12.

Um das Öffnen der Frontscheibe 14 zu erleichtern, weist die untere Kante der Frontscheibe 14 einen Wulst auf, der vorzugsweise im Querschnitt (Y-Richtung) rund ist. Dieser Wulst liegt bei geschlossener Frontscheibe 14 auf einer gegenüber der Seitenwand 15 vergrößerten und an deren vorderen Kante angeordneten wulstartigen vertikalen Säule 17 gleichen Durchmessers auf, die eine konvexe Ausnehmung an ihrer oberen Stirnseite besitzt, in die der Wulst der Frontscheibe 14 zu liegen kommt. Mit anderen Worten, die konvexe Krümmung des Wulsts am unteren Rand der Frontscheibe 14 entspricht der Krümmung der konkaven Ausnehmung am oberen Ende des Wulsts 17 der Seitenwand 15.

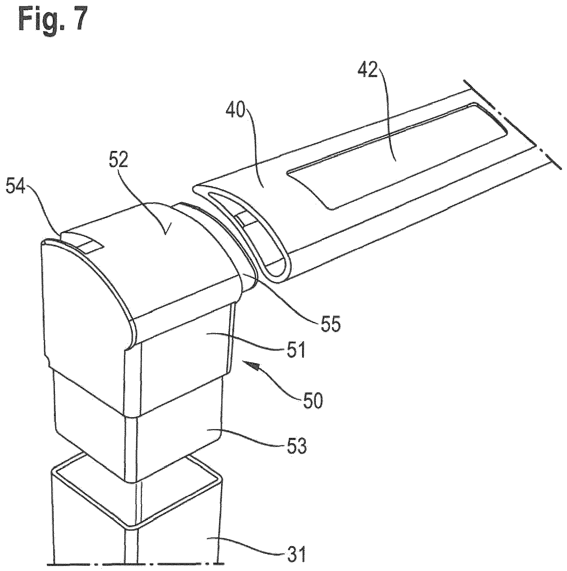

Im Bereich der Arbeitsöffnung 11 ist eine Armauflage 40, das auch als Einströmprofil mit kombinierter Armauflagefunktion bezeichnet werden könnte, vorgesehen, auf der der Laborarbeiter während seiner Arbeit seine Unterarme auflegen kann, damit er seine Arbeiten möglichst ermüdungsfrei und mit ruhiger Hand durchführen kann. Die Armauflage 40 erstreckt sich dabei nahezu über die gesamte Breite (x-Richtung) des Arbeitsraumes 19. Wie in Bezug auf die Fig. 7 zu sehen ist, befindet sich auf der Armauflage 40 und in dieser integriert ein Bedien- und/oder Anzeigefeld 42, über das der Laborarbeiter wichtige Funktionen des Wägeabzuges 1 bedienen kann und/oder das dem Laborarbeiter wichtige Betriebszustände des Wägeabzuges 1 anzeigt.

In Fig. 1 nur schwerlich erkennbar ist ein Luftdurchgang zwischen der Unterseite der Armauflage 40 und der Arbeitsplatte 20 vorgesehen. Durch diesen Luftzugang kann Raumluft bzw. Umgebungsluft aufgrund des im Arbeitsraum 19 herrschenden Unterdrucks in den Arbeitsraum 19 einströmen. Darüber hinaus wird durch die einströmende Raumluft im Bereich der Vorderkante der Arbeitsplatte 20 bewirkt, dass auch die in der Nähe der Oberfläche der Arbeitsplatte 20 befindliche Luft bewegt und nach hinten in Richtung Prallwand 16, in dem sich schlitzförmige Öffnungen (nicht gezeigt) befinden, abtransportiert wird. Es werden also sozusagen Bodenluftstrahlen entlang der Arbeitsplatte 20 erzeugt, die beim Abtransport schwere Gase oder Aerosolen im Bereich der Arbeitsplatte 20 helfen. Durch diese zusätzliche Zuluft muss der später beschriebene Ventilator 70 weniger Saugleistung aufbringen, um die gleiche Umluftmenge (oder Abluftmenge bei einem im Abluftbetrieb betriebenen Wägeabzug) zu erzeugen.

Um die Zuluft möglichst turbulenzarm in den Arbeitsraum 19 durch den Spalt zwischen der Armauflage 40 und der Arbeitsplatte 20 einströmen zu lassen, ist die Vorderkante der Arbeitsplatte 20 strömungsoptimiert und konvex ausgebildet. Aber auch die Armauflage 40 ist an ihrer der Arbeitsplatte 20 zugewandten Unterseite sowie an ihrer der Arbeitsöffnung 11 zugewandten Oberseite strömungsoptimiert gestaltet. Wie in Fig. 2 zu sehen ist, entspricht das Querschnittsprofil der Armauflage 40 einem Tragflächenprofil. Dadurch kann während des Betriebs des Wägeabzuges 1 nicht nur die Umgebungsluft durch den Luftdurchgang unterhalb der Armauflage 40, sondern auch die Umgebungsluft durch die Arbeitsöffnung 11 weitestgehend verwirbelungsfrei und möglichst laminar in den Arbeitsraum 19 einströmen.

In Fig. 1 ebenso zu sehen ist ein in der Arbeitsplatte 20 integrierte Entsorgungssystem, das in der Fig. 1 und Fig. 2 lediglich mittels eines zylindrischen Stutzens 21 angedeutet ist. Dazu wird ein zum Arbeitsraum 19 mit der Arbeitsplatte 20 oberflächenbündig und nach unten in Richtung des Trägers 30 herausragender Anschlussstutzen 21 in die Arbeitsplatte 20 integriert. Durch die so entstehende, vorzugsweise mit einem abnehmbaren Deckel verschließbare Öffnung können beim Arbeiten im Wägeabzug anfallende Abfallstoffe, beispielsweise Verpackungsmaterial oder Arbeitshandschuhe, ergonomisch günstig und vom Bewegungsablauf bequem und sicher unter Ausnutzung der Schwerkraft von oben nach unten entsorgt werden. Da derartige Abfallstoffe meist in Berührung mit den im Arbeitsraum 19 gehandhabten toxischen Substanzen kommen, müssen diese innerhalb des Arbeitsraumes 19 kontaminationsfrei entsorgt werden und dürfen nicht aus dem Arbeitsraum 19 durch die Arbeitsöffnung 11 oder gar durch die hochgeklappte Frontscheibe 14 herausgenommen und mit dem sonstigen im Laborraum anfallenden Müll entsorgt werden. Der nach unten herausragende Anschlussstutzen 21 ist an seiner Außenkontur mit mehreren ringförmigen Nuten versehen, die zur Befestigung von Abfallbeuteln (in den Figuren nicht zu sehen) aus Kunststoff mittels O-Ringen dienen. Die Abfallbeutel können als einzelne Säcke mit verschlossenem Boden oder als kontinuierliche Liner ausgeführt sein. Beim Wechselvorgang werden die Abfallsäcke mit einer Krimpzange oder einem anderweitigen Werkzeug zweifach verschlossen, so dass die Abfallstoffe, die mitunter auch Dämpfe und Aerosole enthalten können, weder aus dem entfernten Abfallsack noch aus dem Abzuginnenraum 19 austreten können.

Wie in Fig. 1 dargestellt ist, verbinden Eckprofile 50, die in Bezug auf die Fig. 7 näher erläutert werden, jeweils eine Seitenwand 15 und ein Ende der Armauflage 40 mit dem Träger 30 bzw. einem der Standbeine 31.

Ebenso ist die untere Kante der Seitenwand 15, die wie das Oberteil 12 und die Frontscheibe 14 vorzugsweise aus Acrylglas gefertigt ist, in einem Profil 18, das vorzugsweise aus Metall hergestellt ist, eingefasst. Dieses Profil 18 liegt im montierten Zustand auf dem darunter befindlichen Querträger 32 auf. Ebenso ist in Fig. 1 zu sehen, dass die Arbeitsplatte 20 eine randseitigen Erhöhung bzw. Wulst aufweist. Dieser Wulst, der hier ohne Bezugszeichen versehen ist, verläuft vorzugsweise um den gesamten Umfang der Arbeitsplatte und verhindert, dass beim versehentlichen Verschütten giftiger oder chemische Reaktionen auslösender Flüssigkeiten oder Pulver diese nicht über den Rand der Arbeitsplatte 20 treten können, sondern vielmehr auf der Arbeitsplatte 20 verbleiben.

Die Arbeitsplatte 20 ist vorzugsweise monolithisch aufgebaut und vorzugsweise aus einer technischen Keramik hergestellt. Das Gewicht der Arbeitsplatte 20 liegt bevorzugt (u.a. auch je nach Größe) in einem Bereich von 40 kg bis 60 kg. Zur Abdichtung des Arbeitsinnenraums 19 ist sowohl randseitig an beiden Seitenkanten als auch an der Rückseite eine elastische Fugendichtung zwischen der Arbeitsplatte 20 und der Prallwand 16 sowie zwischen der Arbeitsplatte 20 und den Seitenwänden 15 vorgesehen.

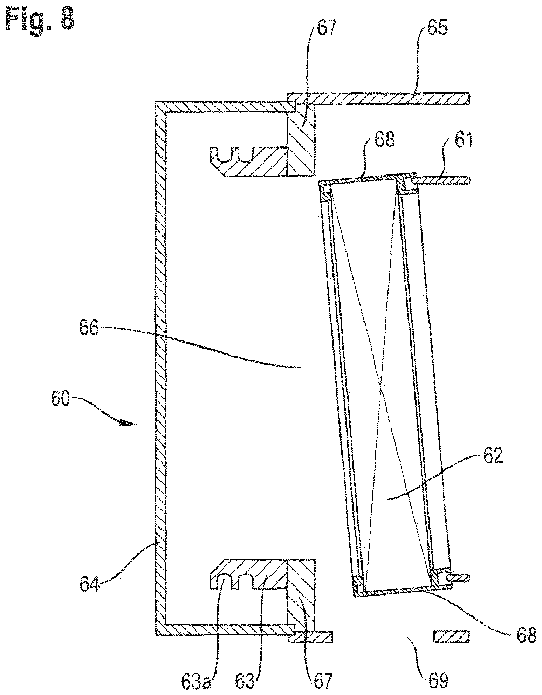

Die Raumluft bzw. Umgebungsluft, die sowohl durch den Luftdurchgang zwischen der Armauflage 40 und der Arbeitsplatte 20 als auch durch die Arbeitsöffnung 11 in den Arbeitsraum 19 eintritt, wird mithilfe des Ventilators 70 durch in dem Wandelement 16b vorgesehene Schlitze (nicht gezeigt) in den Hohlraum 16c der Prallwand 16 eingesaugt. Wie in Fig. 2 zu sehen ist, gelangt die so abgesaugte Luft durch eine Öffnung 16d in einen vorzugsweise rohrförmig ausgebildeten Anschlussflansch bzw. Trägerelement 61 (Fig. 8) und sodann in den Filter 62. Nachdem die Abluft durch den Filter 62 gereinigt worden ist, strömt sie durch eine Öffnung 69 in dem Abluftfiltergehäuse 65 nach unten in Richtung Ventilator 70, durch den Schlauch 80 und tritt durch den Auslass 90 in den Laborraum aus (Fig. 1).

Sämtliche Komponenten des Abluftfiltersystems 60, der Ventilator 70, der Schlauch 80 sowie der Auslass 90 sind vorzugsweise unterhalb der Arbeitsplatte 20 angeordnet. Sämtliche dieser Bauteile des Wägeabzuges 1 können vorzugsweise an dem Träger 30 oder an einer sich nach unten erstreckenden Verlängerung der Prallwand 16 befestigt sein (Fig. 1).

Erneut Bezug nehmend auf die Fig. 1 ist zur Ausleuchtung der Arbeitsplatte 20 und darüber hinaus noch bevorzugt des gesamten Arbeitsraumes 19 eine Lichtquelle vorhanden, die gemäß einem Aspekt in dem Scharnier 13 angeordnet ist.

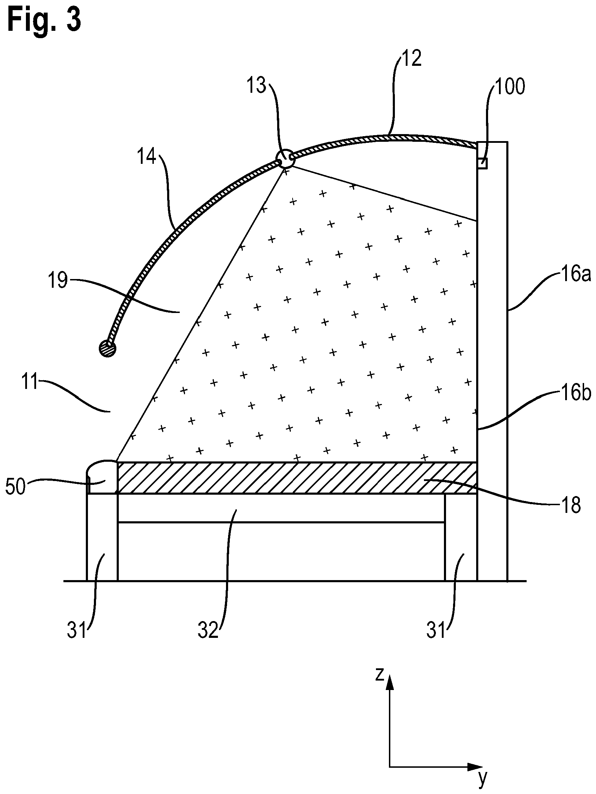

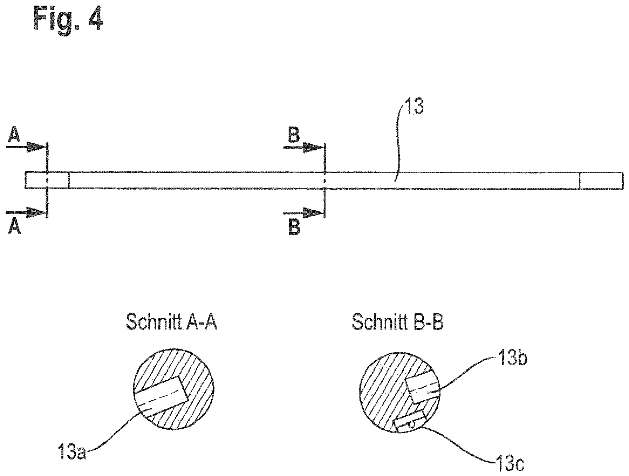

Wie in Fig. 3 zu sehen ist, leuchtet die Lichtquelle den für sämtliche Arbeitsabläufe relevanten Teil des Arbeitsraumes 19 sowie vollständig die Arbeitsplatte 20 aus. Das Scharnier 13, das ebenso in Fig. 4 dargestellt ist, weist einen dreiteiligen, vorzugsweise zylindrischen Körper auf, der noch bevorzugter einen konstanten Durchmesser über die gesamte Länge (x-Richtung) des Scharniers 13 besitzt. Wie in Fig. 1 und Fig. 3 zu sehen ist, ist das Scharnier 13 freitragend und koppelt die Frontscheibe 14 drehbeweglich mit dem Oberteil 12. Das Oberteil 12 und die Frontscheibe 14 sind über justierbare kraftschlüssige Klemmverbindungen mit dem Scharnier 13 verbunden. Dadurch, dass die Klemmkraft justierbar ist, wird die Montage des Wägeabzugs 1 signifikant erleichtert.

Im Scharnier 13 integriert ist mindestens eine Lichtquelle, die vorzugsweise mindestens ein LED-Band umfasst, das sich vorzugsweise über mindestens 75% der Breite bzw. Länge (x-Richtung) des Scharniers 13 erstreckt.

Wie in Fig. 4 zu sehen ist, weist der stationäre Abschnitt des Scharniers 13 (Schnitt A-A) eine Vertiefung 13a auf, in die das Oberteil 12 kraftschlüssig aufgenommen wird. Der drehbewegliche Abschnitt des Scharniers 13 (Schnitt B-B) hingegen weist zwei Vertiefungen auf, zum einen die Vertiefung 13b zur kraftschlüssigen Aufnahme der Frontscheibe 14 und die Vertiefung 13c zur Aufnahme der Lichtquelle.

Vorzugsweise sind zwei LED-Bänder in der Vertiefung 13c vorgesehen, deren Farbtemperatur gemischt und je nach Anforderung eine unterschiedliche Kelvinzahl (Farbtemperatur) besitzen kann. Vorzugsweise besitzt eines der LED-Bänder eine Farbtemperatur von 3000 K, während das andere LED-Band eine Farbtemperatur von 6000 K besitzt. Durch Mischung der Farben der beiden LED-Bänder können im Arbeitsraum 19 auf diese Weise verschiedene Lichttemperaturen erzeugt werden, zum Beispiel warm-weiß (3000 K), neutral-weiß (4500 K) oder tageslicht-weiß (6000 K).

Solche definierten Lichttemperaturen sind zum Beispiel beim Farbnachweis für Arzneimittelsubstanzen erforderlich. Gewöhnlich wird die Farbe der abzuwägenden Arzneimittelsubstanz bei einer definierten Lichttemperatur mit einer geeichten Farbkarte verglichen und so die Farbe der Arzneimittelsubstanz festgestellt.

Die Lichtquelle bzw. das vorzugsweise mindestens eine LED-Band ist in einem lichtdurchlässigen Schutzschlauch, der vorzugsweise aus Kunststoff gefertigt ist, eingekapselt. Zum einen wird dadurch ein chemischer Schutz vor aggressiven Substanzen, die im Arbeitsraum 19 gehandhabt werden, erzielt. Aber auch eine Reinigung und Dekontamination des Arbeitsraumes 19 wird dadurch erleichtert, da die Gefahr eines Kurzschlusses der unter elektrischer Spannung stehenden Lichtquelle vermieden wird.

In den Figuren nicht gezeigt ist eine bevorzugte Rotationsbremse, die in dem Scharnier enthalten ist. Vorzugsweise und je nach Gewicht der Frontscheibe 14 können auch mehrere Rotationsbremsen vorgesehen sein. Durch eine solche Rotationsbremse wird bewirkt, dass sich eine geöffnete Frontscheibe 14 selbstständig und gebremst wieder in die geschlossene Stellung zurückbewegen kann und nicht einfach herunterfällt, was zu etwaigen Beschädigungen oder Verletzungen des Bedienpersonals führen kann.

Ebenso in den Figuren nicht dargestellt ist ein Winkelbegrenzer, der den Öffnungswinkel der Frontscheibe 14 nach oben hin begrenzt und somit die maximal geöffnete Stellung der Frontscheibe 14 festlegt. Dieser Winkelbegrenzer ähnelt einem Anschlag und ist vorzugsweise so eingestellt, dass die maximal geöffnete Stellung der Frontscheibe 14 diejenige ist, in der die Frontscheibe 14 in einem labilen Gleichgewicht verbleiben kann. Alternativ und weiterhin vorzugsweise kann auch eine Arretierung (nicht gezeigt) vorgesehen sein, welche die Frontscheibe 14 in der maximal geöffneten Stellung arretiert.

Fig. 5 ist eine Schnittansicht der Arbeitsplatte 20 im Bereich der doppelwandig ausgeführten Prallwand 16, die zwei zueinander beabstandete Wände 16a, 16b aufweist, die einen Abluftkanal 16c dazwischen festlegen. Ebenso zu sehen ist ein Ausschnitt eines hinteren Standbeins 31 und einer Querstrebe 32. Eine weitere Querstrebe 32 ist durch eine reckteckförmige Doppellinie mit abgerundeten Ecken angedeutet, die senkrecht zur Bildebene (x-Richtung) verläuft. Eine Auflage oder Auflager bzw. eine Strebe 32a ist sowohl mit der sich in y-Richtung erstreckenden Querstrebe 32 als auch mit der sich in x-Richtung erstreckenden Querstrebe 32 verbunden. Als Verbindungsart wird vorzugsweise eine Schweißverbindung verwendet. Auf der Auflage 32a befindet sich ein federelastisches Element 22, das vorzugsweise aus einem Gummi oder einem federelastischen Kunststoff hergestellt ist. Auf dem federelastischen Element 22 aufliegend befindet sich die Arbeitsplatte 20. Die Arbeitsplatte 20 liegt gemäß einem weiteren Aspekt derart auf, dass sie keinen direkten Kontakt mit den Querstreben 32, die Teil des Trägers 30 sind, und der Wand 16b hat.

Fig. 6 zeigt ebenso in Schnittansicht die Arbeitsplatte 20 im Bereich einer in x-Richtung verlaufenden Querstrebe 32 und einer Seitenwand 15. Auch hier ist ein Auflager bzw. eine Strebe 32a zu sehen, die mit den Querstreben 32, welche der Stabilisierung des Trägers 30 dienen, verbunden ist. Auch hier wird zur Verbindung vorzugsweise eine Schweißverbindung eingesetzt. Ebenso zu sehen ist ein Abschnitt einer Seitenwand 15 und des Profils 18, das den unteren Endbereich der Seitenwand 15 einfasst. Die Arbeitsplatte 20 lagert auch hier auf einem federelastischen Element 22, das vorzugsweise aus Gummi oder einem federelastischen Kunststoff hergestellt ist. Die Arbeitsplatte 20 hat auch in diesem Bereich gemäß einem weiteren Aspekt keinen direkten Kontakt zu der Seitenwand 15, dem Profil 18, einem der Querträger 32 und dem Standbein 31.

Während Fig. 5 den in Fig. 1 gezeigten hinteren rechten Eckbereich der Arbeitsplatte 20 und Fig. 6 den in Fig. 1 gezeigten vorderen linken Eckbereich der Arbeitsplatte 20 zeigt, gilt die gleiche Anordnung für den vorderen rechten Eckbereich der Arbeitsplatte 20 und den hinteren linken Eckbereich der Arbeitsplatte 20.

Dadurch, dass die Arbeitsplatte 20 gemäß diesem weiteren Aspekt auf einem federelastischen Element 20 aufliegt und keinen direkten Kontakt zu jedwedem Bauteil des Trägers 30, der Prallwand 16 und der Armauflage 32 hat, ist die Arbeitsplatte 20 vollständig stoß- und schwingungsentkoppelt, so dass etwaige Berührungen des Laborarbeiters mit einem Bauteil des Wägeabzugs, zum Beispiel mit der Armauflage 40 und der Frontscheibe 14, keinen Einfluss auf etwaige Wägeresultate haben. Auch Schwingungen, die möglicherweise von dem Ventilator 70 verursacht werden und sich über das Abluftfiltersystem 60 und die Prallwand 16 fortsetzen, werden somit nicht auf die Arbeitsplatte 20 übertragen. Ebenso ist die Arbeitsplatte 20 von etwaigen Gebäudeschwingungen entkoppelt. Sollte nämlich das Labor, in dem der Wägeabzug 1 installiert ist, sich in einem höher gelegenen Stockwerk befinden, in dem Gebäudeschwingungen ausgeprägter auftreten, kann durch Auswahl eines federelastischen Elements mit geringerer Dämpfungskonstante, zum Beispiel auch eine Gasfeder, die Arbeitsplatte 20 vollständig von solchen Gebäudeschwingungen stoß- und schwingungsentkoppelt sein. Natürlich kann eine Gasfeder auch so eingestellt werden, dass sie andere Arten von Schwingungen hinreichend absorbiert.

In Fig. 7 ist in perspektivischer Darstellung ein Knotenprofil bzw. Eckprofil 50 gemäß einem weiteren Aspekt gezeigt, mittels dessen die Armauflage 40, eine der Seitenwände 15 und der Träger 30, vorzugsweise hier das Standbein 31, miteinander verbunden werden. Die im Anschluss angegebenen Richtungsangaben beziehen sich auf ein Eckprofil im Bereich des vorderen linken Eckbereichs des Wägeabzuges 1.

Das Eckprofil 50 weist einen Basisabschnitt 51 auf, von dem sich in z-Richtung ein Vorsprung 53 nach unten erstreckt, dessen Abmessung wiederum so gewählt ist, dass es in das als Hohlprofil ausgebildete Standbein 31 eingepasst werden kann. Darüber hinaus weist das Eckprofil 50 eine in z-Richtung verlaufende schlitzförmige Ausnehmung 54 auf, dessen Tiefe (y-Richtung) so gewählt ist, dass sie für die formschlüssige Aufnahme und stabile Halterung der Seitenwand 15 ausreicht. In x-Richtung erstreckt sich vom oberen Endabschnitt des Eckprofils 50 ein zapfenförmiger Vorsprung 55, dessen Abmessung und Querschnitt so gewählt ist, dass er in die tragflächenförmige und als Hohlprofil ausgebildete Armauflage 40 eingepasst werden kann. Das strömungsoptimierte Tragflächenprofil der Armauflage 40 ist deutlich in Fig. 7 zu erkennen.

Wie bereits voranstehend beschrieben worden ist, ist die der Arbeitsöffnung 11 zugewandte Oberfläche der Armauflage 40 strömungsoptimiert und konvex ausgebildet. In Fig. 7 ist zu sehen, dass die nach oben (z-Richtung) gerichtete Oberfläche 52 des Eckprofils 50 eine entsprechende strömungsoptimierte und konvexe Kontur besitzt. Dadurch wird ein flächenbündiger, absatzloser Übergang zwischen der Oberfläche 52 des Eckprofils 50 und der Oberfläche der Armauflage 40 sichergestellt. Somit kann auch die Zuluft im Bereich des Eckprofils 50 turbulenzarm durch die Arbeitsöffnung 11 in den Arbeitsraum 19 einströmen.

Wie in Fig. 1 zu sehen ist, sind derartige Eckprofile 50 sowohl im vorderen linken als auch im vorderen rechten Eckbereich des Wägeabzugs 1 vorgesehen.

Derartige Eckprofile 50 gemäß diesem Aspekt vereinfachen nicht nur den Zusammenbau des Wägeabzugs 1, sondern sie bieten auch Vorteile im Hinblick auf die erforderliche regelmäßige Reinigung und Dekontaminierung des Wägeabzugs 1, da es keine Absätze, schwer zugängliche Stellen oder gar offene Vertiefungen gibt, die nur schwer zu reinigen sind. Zusätzlich stellen derart gestaltete Eckprofile 50 eine turbulenzarme Einströmung der Raumluft in den Arbeitsraum 19 im Bereich der Eckprofile 50 sicher.

Ebenso in Fig. 7 ist ein Bedien- und/oder Anzeigefeld 42 gemäß einem weiteren Aspekt zu sehen, das vollständig in der Armauflage 40 integriert ist. Das Bedien- und/oder Anzeigefeld 42 ist dabei oberflächenbündig und flüssigkeitsgeschützt in der Armauflage 40 eingebaut. Etwaige elektrische Leitungen, welche das Bedien- und/oder Anzeigefeld 42 mit Strom versorgen, oder etwaige Datenleitungen können vollständig innerhalb der Armauflage 40 verlaufen. Sie sind somit weder von außen sichtbar, noch erschweren sie die Reinigung des Wägeabzugs.

Das Anzeige- und/oder Bedienfeld 42 kann vorzugsweise lediglich Anzeigeelemente aufweisen, auf denen verschiedene Betriebsfunktionen des Wägeabzugs 1 angezeigt werden. Es kann aber auch ein kombiniertes Feld aus Bedien- und Anzeigeelementen 42 sein, über das auch verschiedene Funktionen des Wägeabzugs bedient werden können. Auch ein akustisches oder visuelles Warnsignal kann über das Feld 42 ausgegeben werden.

Vorzugsweise umfasst das Anzeige- und Bedienfeld 42 fünf beleuchtete kapazitive Tastfelder und einen akustischen Warntongeber. Alle Betriebszustände des Wägeabzugs können auf diese Weise ergonomisch günstig angezeigt und geschaltet werden. Der vor dem Wägeabzug 1 zumeist sitzende Laborarbeiter kann somit vorzugsweise sämtliche Funktionen des Wägeabzugs über das Feld 42 bedienen und sich ebenfalls dort anzeigen lassen, ohne dass er seine Sitzposition stark verändern oder gar aufstehen muss.

Da das Anzeige- und/oder Bedienfeld 42 kapazitive Tastfelder umfasst, verursacht eine unbeabsichtigte Berührung eines der Tastfelder mit einem Unterarm, der meist von einem sehr schlecht elektrisch leitfähigem Kleidungsstück bedeckt ist und normalerweise auf der Armauflage 40 aufliegt, keine Aktivierung des Tastfeldes und somit keine Veränderung eines Betriebszustandes des Wägeabzuges 1. Vorzugsweise umfassen die Tastfelder zum Beispiel "Wägeabzug ein/aus", "Licht ein/aus", Lichttemperatur 3000K/4500K/6000 K", "Alarm", "Filterwechsel".

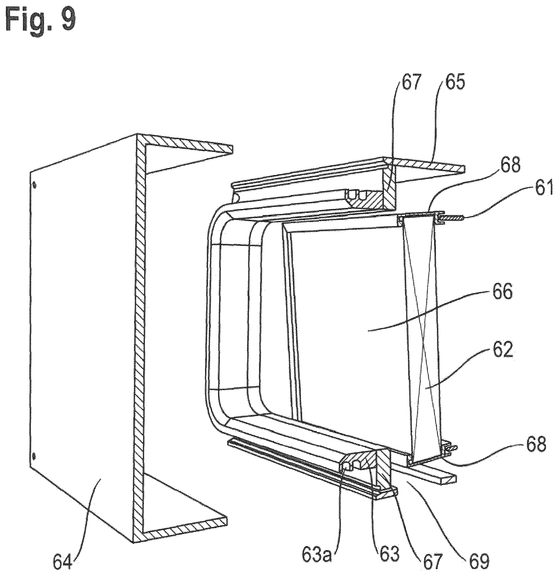

Fig. 8 zeigt eine Schnittansicht durch das Abluftfiltersystem 60, während Fig. 9 das Abluftfiltersystem 60 in einer perspektivischen Explosionsansicht gemäß einem weiteren Aspekt darstellt. Ein Anschlussflansch bzw. ein rohrförmiges Trägerelement 61, das mit durch den Hohlraum 16c der Prallwand 16 geführte Abluft gespeist wird, weist einen Endabschnitt auf, der konusförmig ausgebildet ist. Mit anderen Worten, die ringförmige Stirnfläche, die in Fig. 8 nach links zeigt, ist in Bezug auf eine zur Rohrachse angeordnete Orthogonale geneigt. Dieser Neigungswinkel liegt vorzugsweise in einem Bereich von 5° bis 45°, noch bevorzugter in einem Bereich von 5° bis 15°, und weiterhin bevorzugt beträgt der Neigungswinkel 5°.

Stromabwärts des rohrförmigen Trägerelements 61 ist ein Filter 62 angeordnet, der in einer nutenförmigen Aufnahme 68 gelagert ist. Diese nutenförmige Aufnahme 68 ist wiederum mit dem Endabschnitt des rohrförmigen Trägerelements 61 derart verbunden, dass zumindest die Rohluftseite (vorzugsweise auch die Reinluftseite) des Filters 62 geneigt ist. Dieser Neigungswinkel entspricht vorzugsweise dem Neigungswinkel der Stirnfläche des rohrförmigen Trägerelements 61. Sowohl das rohrförmige Trägerelement 61 als auch der Filter 62 und die nutenförmige Aufnahme 68 sind in einem Gehäuse 65 untergebracht. An der unteren Seite des Gehäuses 65 ist eine Öffnung 69 vorgesehen, die fluidmäßig mit dem Ventilator 70 verbunden ist (Fig. 2).

An dem Gehäuse 65 ist ebenso eine Abfallsackbefestigung 63 befestigt. Diese Abfallsackbefestigung 63 kommt beim Wechseln des Filters 62 zum Einsatz. Ansonsten ist diese von einer lösbaren Klappe 64 bedeckt.

Da der Filter 62 nicht vertikal (z-Richtung) ausgerichtet ist, sondern unter einem spitzen Winkel zur Vertikalen angeordnet ist, wird durch diese geneigte Anordnung vermieden, dass sich auf der Rohluftseite des Filters befindliche Partikel beim Wechselvorgang durch zum Beispiel Erschütterung und die ständig wirkende Schwerkraft von der Filteroberfläche lösen und durch die Öffnung 69 fallen können, von wo sie aus dann ungehindert in den Laborraum gelangen können.

Ein weitere Vorteil des in Fig. 8 und Fig. 9 gezeigten Abluftfiltersystems 60 besteht in dem vertikalen Versatz 67, der vorzugsweise ein integraler Bestandteil der Abfallsackbefestigung 63 ist und vorzugsweise die Abluftfilterentnahmeöffnung 66 festlegt, durch die der Abluftfilter 62 letztendlich hindurchgeführt werden muss. Die Abluftfilterentnahmeöffnung 66 besitzt eine Höhe (z-Richtung), welche kleiner ist als die Höhe (z-Richtung) des Filters 62 als solcher. Mit anderen Worten, die vertikale Filterhöhe, das heißt die tatsächliche Filterhöhe und nicht die Höhe, die der Filter 62 hat, wenn er um einen bestimmten Winkel geneigt ist, ist größer als die Höhenabmessung der Abluftfilterentnahmeöffnung 66. Aufgrund dieses Größenunterschieds muss beim Filterwechsel der Abluftfilter 62 weiter zur Horizontalen verschwenkt werden, um ihn durch die Abluftfilterentnahmeöffnung 66 hindurchführen zu können. Auch diese Schwenkbewegung trägt dazu bei, dass eventuell an der Rohluftfilterseite anhaftende oder gar lose Partikel beim Filterwechsel auf dem Filter 62 verbleiben und nicht ungewollt herunterfallen.

Zum Filterwechsel wird die sogenannte Sackwechseltechnik angewendet. Zu diesem Zweck wird die Abdeckung 64 von dem Gehäuse 65 abgenommen und ein Abfallsack (nicht dargestellt) mittels eines O-Rings mit der ersten Nut 63a verbunden. Danach verschiebt der Laborarbeiter den an der Abfallsackbefestigung 63 befestigten Abfallsack nach rechts zum Filter hin, löst mit dem Sack in beiden Händen im Anschluss den Filter 62 von dem rohrförmigen Trägerelement 61 und bewegt den Filter 62 nach links soweit bis der Sack, der beim Lösen des Filters 62 sozusagen umgestülpt war, wieder seine normale Ausrichtung hat. Danach wird ein zweiter Sack außerhalb des ersten Sacks ebenfalls mittels eines O-Rings an der Abfallsackbefestigung 63 befestigt. Mithilfe des zweiten Sacks wird eine völlig kontaminationsfreie Abnahme des ersten Sacks von der Abfallsackbefestigung 63 sichergestellt. Ist der Filter 62 auf diese Weise gewechselt worden, wird ein neuer Filter 62 samt nutenförmiger Aufnahme 68 an dem rohrförmigen Trägerelement 61 befestigt und sodann die Abdeckung 64 wieder mit dem Gehäuse 65 luftdicht verbunden.

Bei den hier zur Anwendung kommenden Filtern 62 handelt es sich vorzugsweise um sogenannte Schwebstofffilter der Kategorie HEPA-Filter ("High Efficiency Particulate Airfilter").

Weiterhin kann vorzugsweise ein zusätzlicher Filter im Auslass 90 vorgesehen sein. Damit wird die Sicherheit des Gesamtsystems für den Fall einer Undichtigkeit des in Fig. 8 und Fig. 9 gezeigten (ersten) Filters 62, hervorgerufen zum Beispiel durch Filterdurchbruch oder Handhabungsfehler beim Filterwechsel, erhöht.

Gemäß einem weiteren Aspekt ist in der Prallwand 16 eine Erfassungseinrichtung 100 untergebracht, wie in Fig. 3 zu sehen ist. Die Erfassungseinrichtung 100 ist vorzugsweise eine optoelektronische Erfassungseinrichtung, noch bevorzugter eine Laserdiode und ein Photodetektor. Die Laserdiode und der Photodetektor sind vorzugsweise zu einem Bauteil kombiniert und sind so angeordnet, dass ein von der Laserdiode emittierter Laserstrahl eine Drehbewegung der Frontscheibe 14, vorzugsweise des Scharniers 13, erfassen kann.

Die Einheit aus Laserdiode und Photodetektor ist während des Betriebs des Wägeabzugs 1 aktiv, um ein Warnsignal, visuell oder hörbar, an denjenigen Laborarbeiter auszugeben, der während des Betriebs des Wägeabzugs 1 unbeabsichtigt oder gar absichtlich die Frontscheibe 14 von der geschlossenen Stellung weg bewegt. Solange die Frontscheibe 14 geschlossen ist und das Scharnier 13 sich nicht bewegt, wird der von der Laserdiode emittierte Laserstrahl vom Photodetektor detektiert. Empfängt der Photodetektor aus irgendeinem Grund kein Laserlicht mehr, wird daraus geschlossen, dass das Scharnier 13 sich gedreht hat und die Frontscheibe 14 daher nach oben bewegt worden sein muss. Der Photodetektor gibt sodann ein Signal an eine nicht gezeigte Steuereinrichtung weiter, die wiederum die Ausgabe eines Warnsignals, im Falle eines sichtbaren und akustischen Warnsignals am Feld 42 in der Armauflage 40 veranlasst.

Die voranstehend beschriebenen Aspekte des in Fig. 1 dargestellten Wägeabzugs 1, welche die stoß- und schwingungsentkoppelte Lagerung der Arbeitsplatte 20 im Arbeitsraum 19, die Integration des Anzeige- und/oder Bedienfelds 42 in der Armauflage 40, die Integration einer Lichtquelle im Scharnier 13, das Eckprofil 50, den kontaminationsfreien Wechsel des Filters 62 in dem Abluftfiltersystem 60 sowie die Unterbringung einer Laserdiode/Photodetektor in oder an der Prallwand 16 betreffen, können sowohl in Kombination als auch einzeln und in jeglicher Permutation vorliegen. Die Figurenbeschreibung ist nicht dahingehend zu verstehen, dass der Wägeabzug 1 sämtliche Aspekte gleichzeitig enthalten muss.

Aber auch die voranstehend beschriebenen Merkmale jedes einzelnen Aspekts können beliebig kombiniert werden. Selbst wenn eine Kombination einzelner Merkmale möglicherweise technisch abwegig erscheint, so erkennt der Fachmann jedoch, welche Merkmale technisch sinnvoll miteinander kombiniert werden können.

## Patentansprüche

1. Wägeabzug (1) zum Wägen pharmazeutisch wirksamer bzw. toxischer Substanzen in einem Labor, umfassend:
ein Gehäuse (10), das einen Arbeitsraum (19) festlegt, wobei eine Vorderseite des Gehäuses (10) eine bei bestimmungsgemäßem Gebrauch des Wägeabzuges (1) stets geöffnete Arbeitsöffnung (11) aufweist,
eine Arbeitsplatte (20), die den Arbeitsraum (19) bodenseitig begrenzt,
eine Armauflage (40) im Bereich der Arbeitsöffnung (11), und
einen Träger (30), der das Gewicht des Gehäuses (10), der Arbeitsplatte (20) und der Armauflage (40) trägt,
**dadurch gekennzeichnet, dass** die Arbeitsplatte (20) bei bestimmungsgemäßen Gebrauch des Wägeabzuges stoß- und schwingungsentkoppelt von dem Gehäuse (10), der Armauflage (40) und dem Träger (30) ist.

2. Wägeabzug (1) nach Anspruch 1, wobei es keinerlei direkten Kontakt zwischen der Arbeitsplatte (20) und (i) dem Gehäuse (10), (ii) der Armauflage (40) und (iii) dem Träger (30) gibt.

3. Wägeabzug (1) nach Anspruch 1 oder 2, wobei es keinerlei lösbare kraft-, form- oder stoffschlüssige Verbindung zwischen der Arbeitsplatte (20) und (i) dem Gehäuse (10), (ii) der Armauflage (40) und (iii) dem Träger (30) gibt.

4. Wägeabzug (1) nach einem der vorhergehenden Ansprüche, wobei die Arbeitsplatte (20) ausschließlich auf dem Träger (30) stoß- und schwingungsentkoppelt aufliegt.

5. Wägeabzug (1) nach einem der vorhergehenden Ansprüche, wobei zwischen dem Träger (30) und der Arbeitsplatte (20) mindestens ein federelastisches Element (22) vorgesehen ist, auf dem die Arbeitsplatte (20) aufliegt.

6. Wägeabzug (1) nach Anspruch 5, wobei das federelastische Element (22) aus Gummi oder einem elastischen Kunststoff hergestellt ist.

7. Wägeabzug (1) nach einem der vorhergehenden Ansprüche, wobei der Träger (30) derart ausgebildet ist, dass er eine federelastische 3-Punkt oder 4-Punkt Auflage für die Arbeitsplatte (20) vorsieht.

8. Wägeabzug (1) nach einem der vorhergehenden Ansprüche, wobei die Arbeitsplatte (20) monolithisch ist und ein Gewicht in einem Bereich von 40 kg bis 60 kg aufweist.

9. Wägeabzug (1) nach einem der vorhergehenden Ansprüche, wobei das Gehäuse (10) und die Armauflage (40) ausschließlich auf dem Träger (30) aufliegen.

10. Wägeabzug (1) nach einem der Ansprüche 5 bis 9, wobei der Träger (30) mindestens eine Strebe (32a) aufweist und das federelastische Element (22) zwischen der Strebe (32a) und der Arbeitsplatte (20) angeordnet ist, und wobei die Strebe (32a) derart angeordnet ist, dass eine Arbeitsfläche der auf dem federelastischen Element (22) aufliegenden Arbeitsplatte (20) bündig mit einer Oberseite des Trägers (30) fluchtet.

11. Wägeabzug (1) nach einem der vorhergehenden Ansprüche, wobei entlang des seitlichen und hinteren Umfangs der Arbeitsplatte (20) eine elastische Fugendichtung vorgesehen ist.

## Claims

1. A weighing hood (1) for weighing pharmaceutically active or toxic substances in a laboratory, comprising:
a housing (10), which defines a work space (19), wherein a front surface of the housing (10) has a work opening (11) that is always open in an intended use of the weighing hood (1),
a work surface (20), which delimits the floor of the work space (19),
an armrest (40) in the region of the work opening (11), and
a support (30), which supports the weight of the housing (10), the work surface (20), and the armrest (40),
**characterised in that** the work surface (20) in an intended use of the weighing hood (1) is decoupled from the housing (10), the armrest (40), and the support (30) with regard to impacts and vibrations.

2. The weighing hood (1) according to Claim 1, wherein there is no direct contact between the work surface (20) and (i) the housing, (ii) the armrest (40), and (iii) the support (30).

3. The weighing hood (1) according to Claim 1 or 2, wherein there is no releasable force-fitting, form-fitting, or material-bonding between the work surface (20) and (i) the housing, (ii) the armrest, and (iii) the support (30).

4. The weighing hood (1) according to any of the preceding Claims, wherein the work surface (20) rests exclusively on the support (30) such that it is decoupled from impacts and vibrations.

5. The weighing hood (1) according to any of the preceding Claims, wherein a least one resilient element (22) is provided between the support (30) and the work surface (20), on which the work surface (20) rests.

6. The weighing hood (1) according to Claim 5, wherein the resilient element (22) is produced from rubber or an elastic plastic.

7. The weighing hood (1) according to any of the preceding Claims, wherein the support (30) is configured such that it provides a resilient 3-point or 4-point support for the work surface (20).

8. The weighing hood (1) according to any of the preceding Claims, wherein the work surface (20) is monolithic, and has a weight in a range of 40 kg to 60 kg.

9. The weighing hood (1) according to any of the preceding Claims, wherein the housing (10) and the armrest (40) rest exclusively on the support (30).

10. The weighing hood (1) according to any of the Claims 5 to 9, wherein the support (30) has at lest one brace (32a), and the resilient element (22) is disposed between the brace (32a) and the work surface (20), and wherein the brace (32a) is disposed such that a work area of the work surface (20) lying on the resilient element (22) is flush with the surface of the support (30).

11. The weighing hood (1) according to any of the preceding Claims, wherein an elastic joint seal is provided along the lateral and rear circumference of the work surface (20).

## Revendications

1. Sorbonne de pesée (1) pour peser des substances à action pharmaceutique ou toxiques dans un laboratoire, comprenant :
un boîtier (10) qui définit un espace de travail (19), un côté avant du boîtier (10) présentant une ouverture (11) de travail toujours ouverte lors d'une utilisation conforme de la sorbonne de pesée (1),
une plaque de travail (20), qui limite l'espace de travail (19) côté fond,
un appui pour bras (40) dans la zone de l'ouverture de travail (11), et
un support (30), qui porte le poids du boîtier (10), de la plaque de travail (20) et de l'appui pour bras (40),
**caractérisée en ce que** la plaque de travail (20), lors d'une utilisation conforme de la sorbonne de pesée, est découplée en termes de chocs et de vibrations par rapport au boîtier (10), à l'appui pour bras (40) et au support (30).

2. Sorbonne de pesée (1) selon la revendication 1, dans laquelle il n'y a aucun contact direct entre la plaque de travail (20) et (i) le boîtier (10), (ii) l'appui pour bras (40) et (iii) le support (30).

3. Sorbonne de pesée (1) selon la revendication 1 ou 2, dans laquelle il n'y a aucune liaison par force, par complémentarité de forme ou d'un seul tenant amovible entre la plaque de travail (20) et (i) le boîtier (10), (ii) l'appui pour bras (40) et (iii) le support (30).

4. Sorbonne de pesée (1) selon l'une des revendications précédentes, dans laquelle la plaque de travail (20) repose exclusivement sur le support (30) en étant découplée en termes de chocs et de vibrations.

5. Sorbonne de pesée (1) selon l'une des revendications précédentes, dans laquelle il est prévu entre le support (30) et la plaque de travail (20) au moins un élément élastique à ressort (22) sur lequel la plaque de travail (20) repose.

6. Sorbonne de pesée (1) selon la revendication 5, dans laquelle l'élément élastique à ressort (22) est fabriqué en caoutchouc ou en une matière synthétique élastique.

7. Sorbonne de pesée (1) selon l'une des revendications précédentes, dans laquelle le support (30) est formé de telle sorte qu'il prévoie un appui élastique à ressort en 3 points ou 4 points pour la plaque de travail (20).

8. Sorbonne de pesée (1) selon l'une des revendications précédentes, dans laquelle la plaque de travail (20) est monolithique et présente un poids dans une plage de 40 kg à 60 kg.

9. Sorbonne de pesée (1) selon l'une des revendications précédentes, dans laquelle le boîtier (10) et l'appui pour bras (40) reposent exclusivement sur le support (30).

10. Sorbonne de pesée (1) selon l'une des revendications 5 à 9, dans laquelle le support (30) comporte au moins une entretoise (32a) et l'élément élastique à ressort (22) est disposé entre l'entretoise (32a) et la plaque de travail (20), et dans laquelle l'entretoise (32a) est disposée de telle sorte qu'une surface de travail de la plaque de travail (20) reposant sur l'élément élastique à ressort (22) soit alignée au ras d'un côté supérieur du support (30).

11. Sorbonne de pesée (1) selon l'une des revendications précédentes, dans laquelle il est prévu le long de la circonférence latérale et arrière de la plaque de travail (20) un joint élastique.
